(19) Europäisches Patentamt
European Patent Office
Office européen des brevets

(11) EP 2 372 577 A1

(12) EUROPEAN PATENT APPLICATION

(43) Date of publication:
05.10.2011 Bulletin 2011/40

(51) Int Cl.:
G06F 17/30 (2006.01)

(21) Application number: 10250692.0

(22) Date of filing: 31.03.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(71) Applicant: British Telecommunications public
limited company
London EC1A 7AJ (GB)

(72) Inventor: The designation of the inventor has not
yet been filed

(74) Representative: Lidbetter, Timothy Guy Edwin et
al
BT Group Legal
Intellectual Property Department
PP C5A, BT Centre
81 Newgate Street
London
EC1A 7AJ (GB)

(54) Context system

(57) The present invention provides an extended context map that can be used in the prioritisation of content which is displayed to a user. The extended context map contains a hierarchical arrangement of contexts, which are associated with a hierarchical arrangement of topics and sub-topics.

Figure 2

**Description**

The identification of context is an important tool in helping to deliver relevant information to users of ICT (as well as restricting the delivery of non-relevant information). Context management is of increasing importance to ICT users as the number of available devices and amount of accessible information increases. Poor management of context is seen as a major issue for knowledge workers in their use of ICT. Abrupt changes brought about by unplanned communication of information delivery are seen as causing a major decrease in productivity.

Context can be characterised by a number of different factors including location, the type of device being used, a user's current interest, etc. Of there, the hardest to determine is often the current interest of the user since it is quite subjective. Various approaches have been developed which attempt to model the interests of a user as a profile consisting of a set of topics (which may be arranged as a flat list, a hierarchy or as a set of related nodes) (see, for example, J Davies et al, 'Knowledge Sharing Agents over the World Wide Web', BT Technology Journal, July 1998, pp 104-109 and J Davies et al, 'Ontoshare: A Knowledge Management Environment for Virtual Communities of Practice', Proc. 2nd Int. Conf. On Knowledge Capture, pp 20-27, 2003. The user's current interest is then identified by one or more of these topics being deemed to be currently relevant often by a degree of relevance measure.

Profiles can be used to improve the relevancy of information that is provided to the user as the result of a request e.g. results of a web search. Alternatively, they can be used to filter, prioritise and deliver relevant information to users, either with respect to information sent by other users or in a more proactive manner. These examples of usage are typically enabled with the use of automatic classification techniques which can analyse incoming information and determine its degree of relevance to topics within the profile and then rank and/or filter the information appropriately. Examples of such classification techniques can be found at M Grč ar *et al 'User Profile Specification and Data Gathering Module',* SEKT Project, 2004, Deliverable Reference D.5.5.1. & B Fortuna et a/'Semi-automatic Construction of Topic Ontology', Semantics, Web and Mining, Joint International Workshop, EWMF 2005 and KDO 2005, Porto, Portugal, (2005). It will be understood by those skilled in the art that these techniques are examples of suitable classification techniques and that other similar techniques may be used.

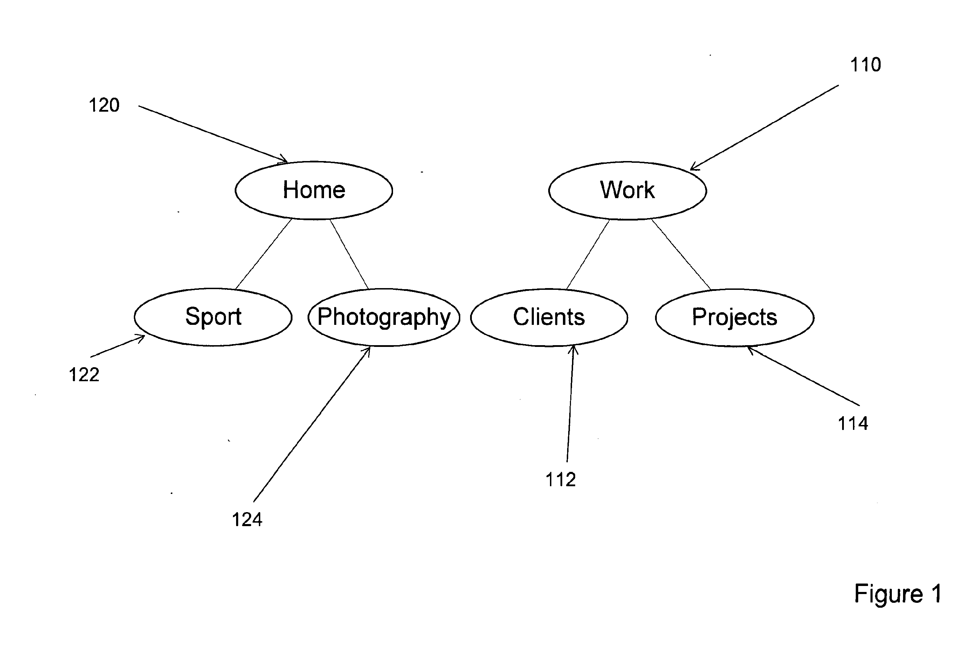

Increasingly, user profiles are considered as being arranged in a hierarchical manner. There is a realisation that a representation where narrower topics are subsumed by broader topics can help provide relevant information at an appropriate level of detail and that information classified under broader or narrower topics than the current topic of focus might also be of interest to a user. In such a situation, users may wish to organise their profile such that topics exist under one or more broad contexts. Figure 1 shows a figurative depiction of a conventional context map which shows two broad contexts that typically exist for a particular user's interaction with ICT, with context Work 110 and Home 120. Each of these broad contexts comprise a plurality of further contexts which are located at a lower level within the hierarchy of the context map. The Work context comprises further contexts Clients 112 and Projects 114 whilst the 'Home' context comprises further contexts Sport 122 and Photography 124. The hierarchy of the context map indicates that, for example, the Sport and Photography contexts are subsets of the Home context.

It will be understood that the profiles can be learned automatically by analysing a corpus of material e.g. documents on a disk drive, web pages visited, e-mails read, etc. which are typically characterised by the set of keywords that are common to the group. A further step involves relating the topics to topics in pre-existing topic hierarchies such as DMoz or Inspec. This allows the profile topics to be identified with a name (rather than just a set of keywords). Combinations of these two approaches are also possible, either where users modify automatically generated profiles or where users identify top level topics or contexts and then request to generate a topic hierarchy underneath these based on the material that the user deems to be appropriate to the top level topic. Users can then be placed within the context map (either manually or automatically by monitoring their ICT usage) and the placement of a user within a context map should affect the behaviour of their ICT services and devices, that is when a user is placed in the work context then they will be provided with work related information and work related communication will be prioritised.

One of the problems inherent with such an approach is that it is not straightforward to deal with situations when a user has switched from one region of a context map to a second region or the situation where a user is dealing with a single information source which straddles more than one topic. Furthermore, users often switch contexts for very small durations of time, for example checking a weather forecast or sports score whilst working on a work-related document.

A Schmidt, "Bridging the gap between knowledge management and e-learning with context aware corporate learning solutions", Post Conf. Proc. 3rd Conf. Professional Knowledge Management - Experiences and Visions (WM05), pp 203-213 Springer (2005), discloses a model for context management which attempts to handle aging and imperfection in the collection of context related information. It identifies that it is essential to detect and distinguish between context evolution and context switching and that conflict resolution strategies are needed where contradictory evidence has been provided.

According to a first aspect of the present invention there is provided a method of selecting data to be displayed by a terminal, the method comprising the steps of: a) analysing content being accessed by a terminal from a content repository; b) classifying the content being accessed by the terminal; c) determining the context of the terminal; d) selecting data to be displayed on a terminal in accordance with the content classification performed in step b) and the terminal context determined in step c), wherein in step c) the context of the terminal is determined in accordance with data extracted from a context map, the context map comprising a plurality of contexts, the plurality of contexts being arranged in a first hierarchical network, and a plurality of topics, the plurality of topics being arranged in a second hierarchical network such that the each of the contexts in the lowest hierarchical level of the first hierarchical network are associated with one or more topics from the highest hierarchical level of the second hierarchical network.

According to a second aspect of the present invention there is provided a data carrier device comprising computer executable code for performing a method as described above.

According to a third aspect of the present invention there is provided an apparatus comprising a central processing unit, volatile data storage means and non volatile data storage means, the apparatus being configured to perform a method as described above.

Embodiments of the present invention will now be described, by way of example only, with reference to the accompanying drawings in which:

Figure 1 shows a Figure 1 shows a figurative depiction of a conventional context map which shows two broad contexts;
Figure 2 shows a figurative depiction of an extended context map which also shows two broad contexts;
Figures 3 to 5 show further figurative depiction of the extended context map of

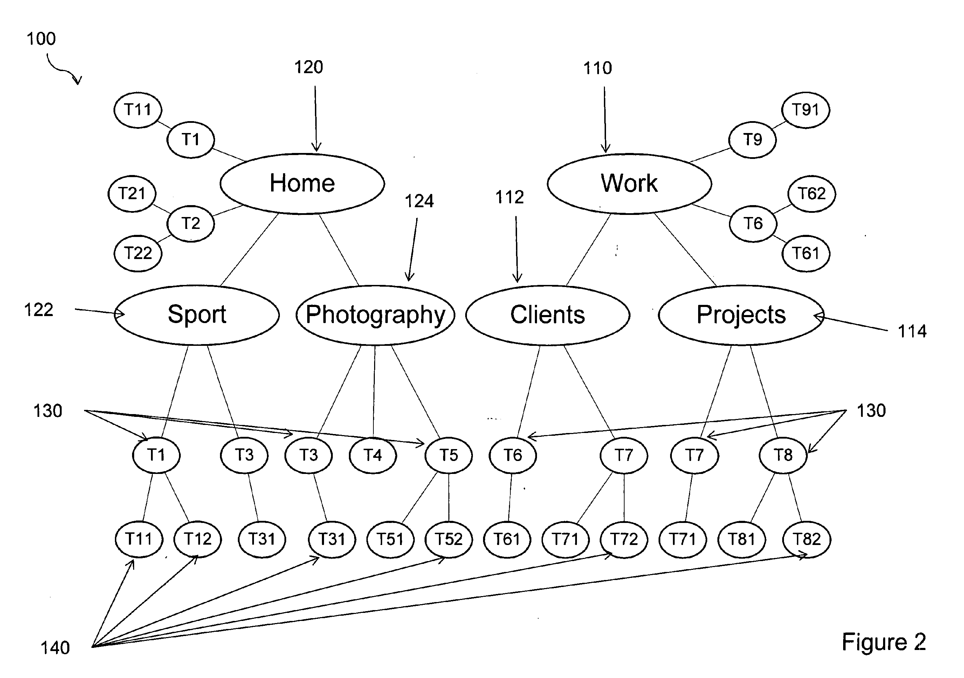

Figure 2 as the user context evolves;

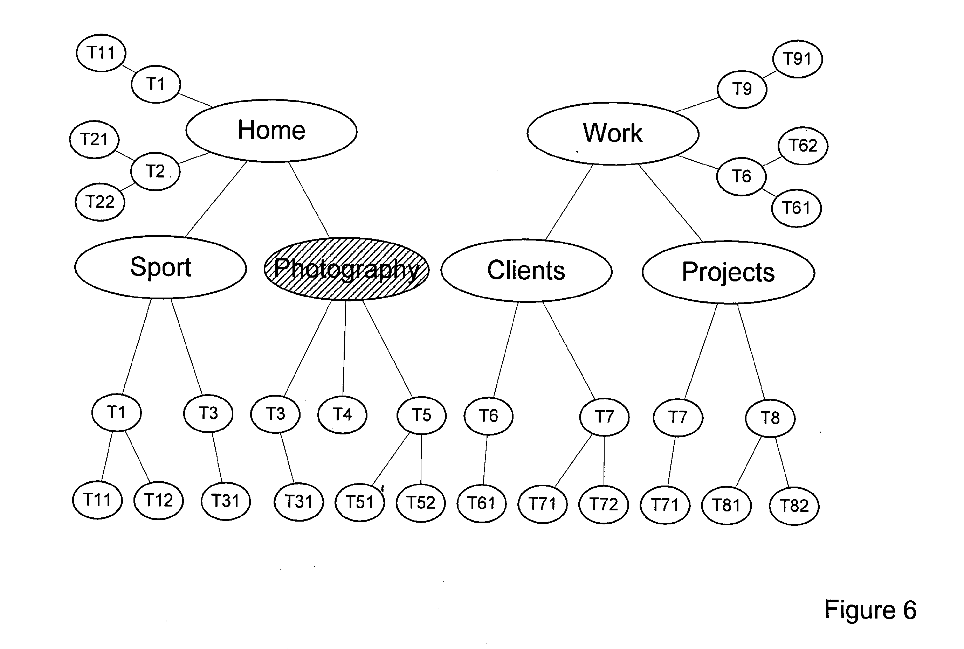

Figure 6 shows a further figurative depiction of the extended context map of
Figure 2 as the user context is switched;

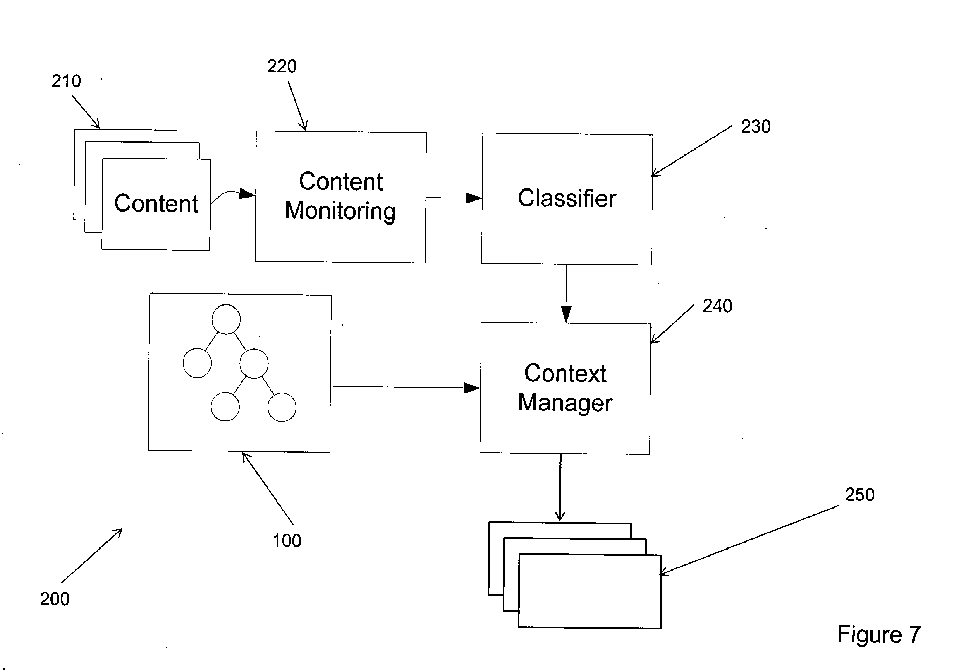

Figure 7 shows a schematic depiction of a system which can be used to implement a method according to the present invention; and

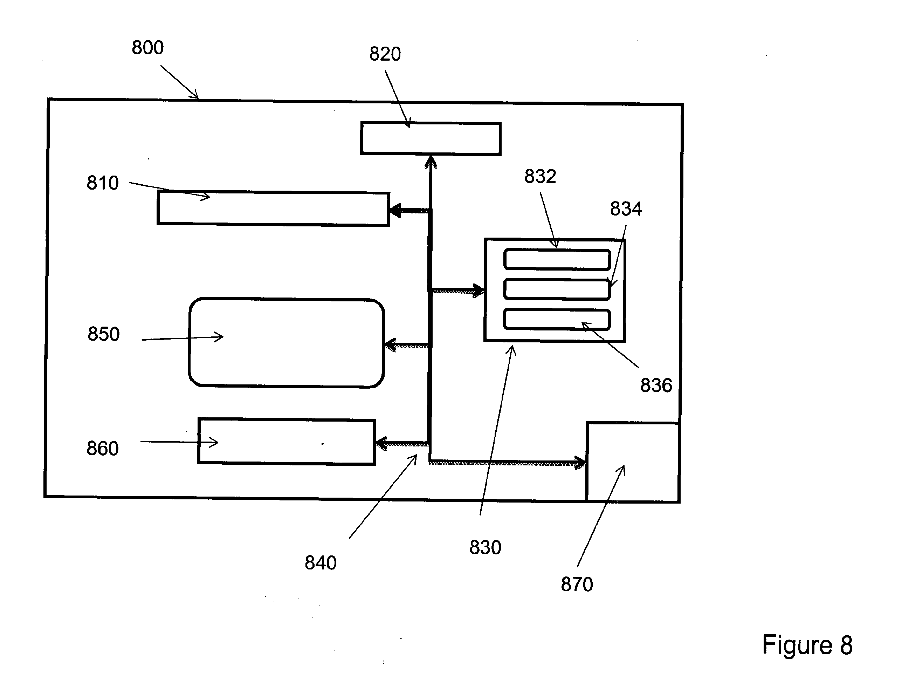

Figure 8 shows a schematic depiction of an apparatus which can be used to implement a method according to the present invention.

Figure 2 shows a figurative depiction of an extended context map 100 which also shows two broad contexts, as described above with respect to Figure 1, which can be used to describe the operation of a method according to the present invention. The extended context map shows the top level broad contexts Work 110 and Home 120 along with the lower level further contexts Clients 112, Projects 114, Sport 122 and Photography 124. The hierarchy of the extended context map 100 has been extended to include a first hierarchy of topics 130 and a second hierarchy of subtopics 140. Each of the top level broad contexts has a hierarchical tree extending beneath it. Each of the topics has a unique identifier and it can be seen for Figure 2 that a single topic may be relevant to one or more contexts. For example, it can be seen that topic T1 is relevant to the further context Sport as well as to the broad context work and similarly topic T3 is relevant to both further contexts Sport and Photography. Each of the plurality of topics comprises one or more subtopics 140.

It will be understood by those skilled in the art that the extended context map discussed above with reference to Figure 2 has been simplified for the sake of the following discussion. It will be understood that in reality a context map may have more than two top level broad contexts and that each of the these broad contexts is likely to have many more than two lower level further contexts associated with it. The extended context map may comprise multiple levels of further contexts and/or multiple levels of sub-topics associated with the first hierarchy of topics 130.

The information being accessed by a user can be monitored and automatically classified, for example using one of the techniques referenced above, such that the user's activities can be associated with one or more of the topics shown in the extended context map 100. Such an association may only be made if a there is a suitable degree of confidence regarding the relevance of such an association. If there is a large overlap between the keywords extracted from a piece of information and the keywords that describe a topic then the confidence is high. Furthermore, if particular keywords are deemed to be very relevant to a topic and/or a piece of information and there is a large overlap with these keywords then confidence will be very high.

The measure of confidence in an association between a user and one or more topics may degrade or diminish over time, especially if the user's interest moves on to a different topic. This decrease in the measure of confidence may be a linear decrease, an exponential decrease, or may be described by some other function. Different contexts or topics may experience decreases in the measure of confidence at different rates.

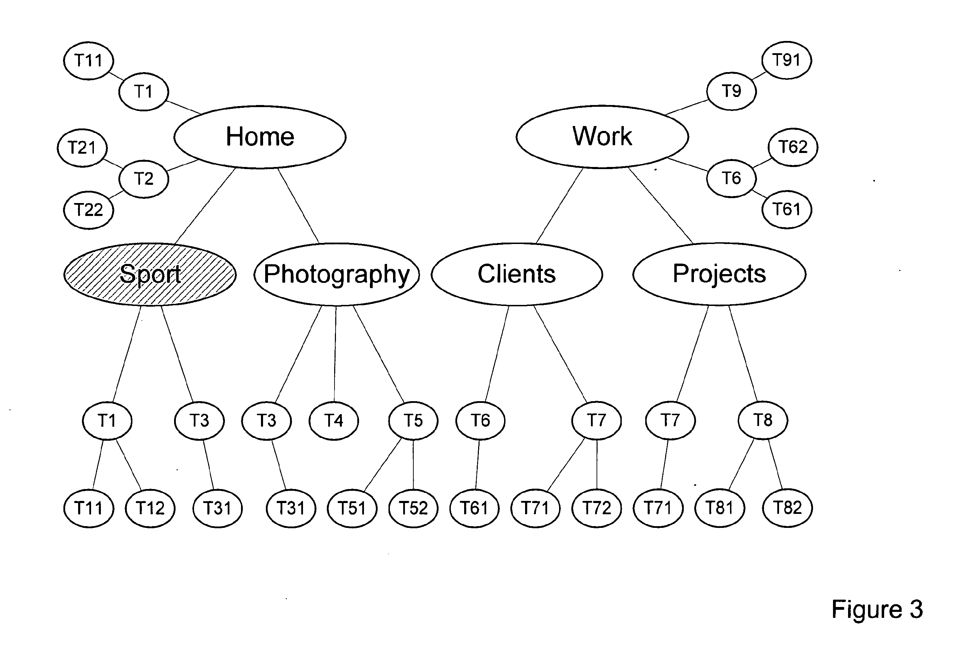

Figure 3 shows a figurative depiction of the extended context map shown in Figure 2, for which some of the topics and sub-topics have been indicated as being of interest to a user. Figure 3 shows that topics T1 and T12 have been shaded, indicating their relevance to a particular user. As a result of topics T1 and T12 being of interest to a user, 'Sport' is chosen as the user's current context as this is the narrowest common ancestor of the relevant topics that is a designated context. Although topic T1 is also relevant to the context 'Home', this would result is a broader context than 'Sport' being chosen (as 'Home' is higher up in the hierarchy of contexts than 'Sport') and thus this relationship is not considered. It can be seen from Figure 3 that the selected context is hatched. Once a context is selected, the topics placed underneath it in the context map are deemed to be relevant to the user and can be used to prioritise the delivery of information such as search results, e-mails, etc. All of the topics related to a selected context may be deemed to be relevant. Referring to Figure 3, this means that topics T1 & T3, along with all of the related subtopics are deemed to be relevant. Alternatively, it might be possible to restrict the relevant topics to those which are actively of interest, along with any related subtopics. In this case, this would mean that only T1, T11 & T12 would be deemed to be of interest.

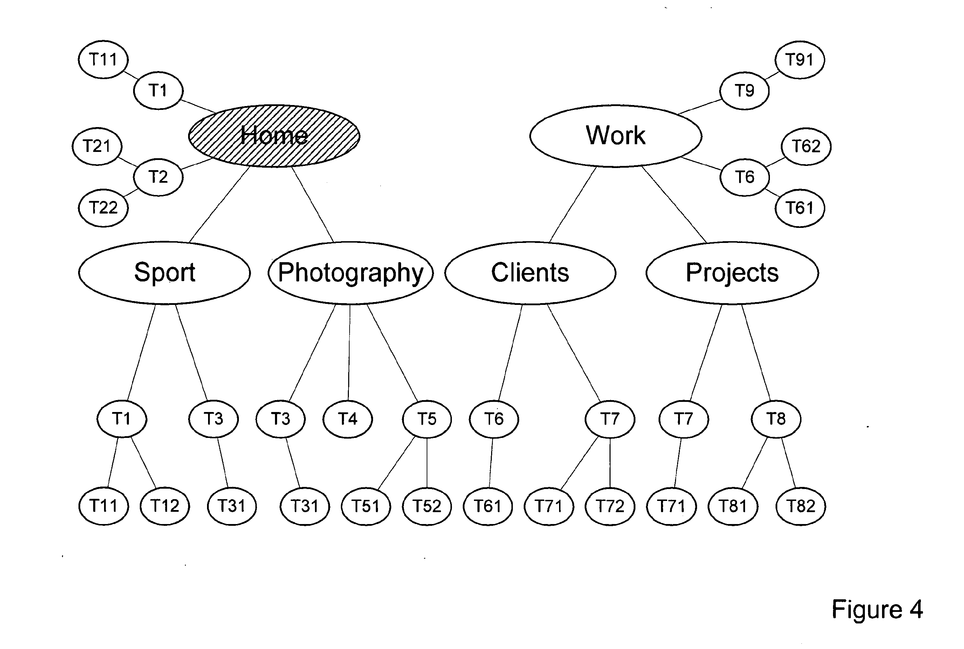

Over time, a user's interest may move to different topics. Figure 4 shows a further figurative depiction of the extended context map shown in Figure 2, in which the topic T4 is now also detected to be of interest to the user, in addition to the previous topics T1 & T12. As T4 is not of any relevance to the 'Sport' context, being relevant only to the 'Photography' context, then the user's current context will move up the hierarchy of contexts from 'Sport' to 'Home', as can be seen in Figure 4 by the hatching. This change reflects that the user has changed the focus of their attention, although rather than making a discrete change to the 'Photography' context, a more general context is chosen to reflect the fact the user may be evolving their context rather than switching it. This reflects that the user is carrying out tasks that are relevant to the 'Home' context but not specific to a narrower context.

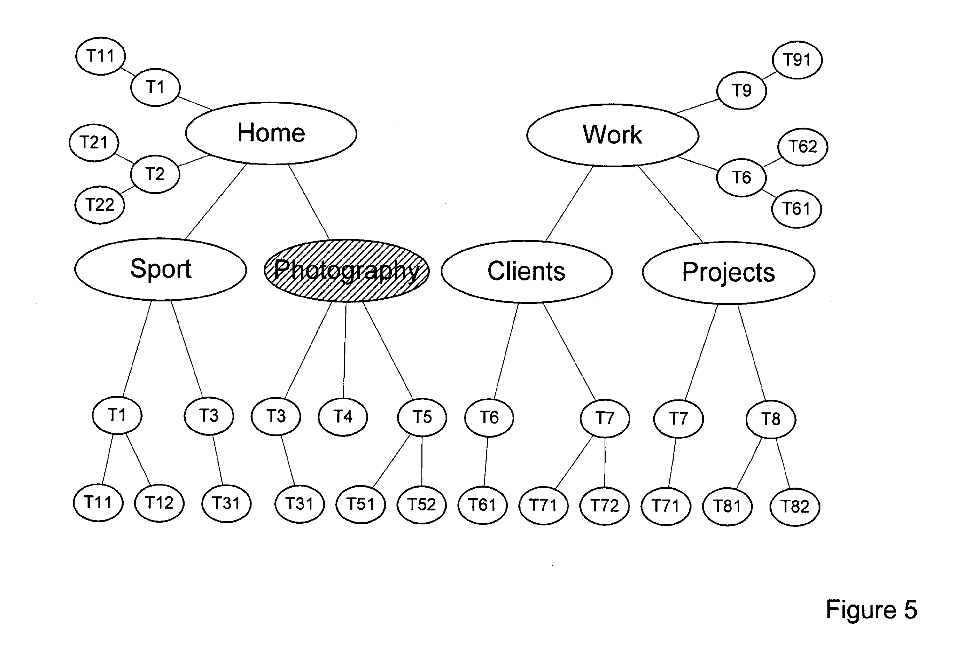

Figure 5 shows a yet further figurative depiction of the extended context map shown in Figure 2, in which the user maintains their interest in topic T4. As discussed above, an aging function can be applied to the degree of confidence applied by the classifier when identifying the interest in each particular topic. Thus, if the user continues to be interested in topic T4 but no longer interested in topics T1 & T12 then the degree of confidence relating to topics T1 & T12 will eventually fall below a particular threshold such that T4 is left being the only topic of interest. Figure 5 depicts this, with only topic T4 being shaded, thus indicating the user's interest. Consequently, the user's context will evolve from 'Home' to 'Photography', as the 'Photography' context will then become the narrowest common ancestor ,and will be selected as the user's context.

In a method according to a further embodiment of the present invention, instead of selecting the narrowest common ancestor when determining a user's context it may be preferred to select more than one lower level further contexts. For example, referring to Figure 4, if the selected topics of interest were T1, T4 & T12 then it may be appropriate to select the union of 'Sport' and 'Photography' as being the user's context rather than 'Home'. Such an approach is likely to provide better results where each top level context is associated with a larger number of lower level further contexts than those that are shown in Figure 4.

Figure 6 shows still further figurative depiction of the extended context map shown in Figure 2, indicating that the user is now displaying interest in both topics T4 and T91. It can be seen from the context map that these topics have very little in common, as they are attached to different trees within the context map, indicating that it is likely that there is a large semantic difference between the two topics. In the preceding discussion with respect to Figures 3 to 5, it can be seen that the user's context evolved from 'Sport' to 'Home' to 'Photography' as the user displayed interest in topics that had some degree of semantic relationship. However, topic T91 is associated with the 'Work' context and is thus semantically unrelated to topic T4, which is associated with the 'Photography' lower level context (and thus is also associated with the 'Home' context). Due to the semantic differences between topics T4 and T91 it would be inappropriate to 'evolve' the user's context, as described above.

In an alternative embodiment of the present invention, the user's context may be switched when there is a significant semantic difference between topics of interest. Such a switch may occur, in preference to a context evolution, when, for example, the topics of interest are a part of hierarchical trees associated with different top level contexts. Furthermore, it may be appropriate to switch between two topics on the same hierarchical tree, rather than evolving between them, if there is a significant semantic distance between the topics. Such a situation may occur when a single top level context comprises several lower level contexts.

When switching context it is important to ensure that a move away from the current context is appropriate and is not being caused by spurious results from a classifier or that the user has only momentarily addressed information related to a topic outside of the current context. This can be addressed by requiring a higher degree of evidence that the new context is more appropriate than the current context. Thus, whereas it might be appropriate to evolve a user's context when the degree of confidence associated with a new topic exceeds the degree of confidence associated with the current topic, a switch of context might only occur when the degree of confidence associated with a new topic exceeds the degree of confidence associated with the current topic by a significant margin. Alternatively, or in addition, further comparators or indicators may be used when determining whether to switch a context. For example, this may include a frequency measure of either the number of topics of interest or the number of current information items (i.e. documents, e-mails) that have been deemed to be relevant to the context. Also, a further weight may be applied to the score for a new context. This weighting could decrease (or increase) the likelihood of a switch or serve to delay the switch being made in order to avoid switches being made prematurely (or belatedly). This weighting may be particular to the two contexts under consideration. Thus, a matrix of weightings between contexts can be built up, where the level of weight is used to influence the likelihood of a switch or the speed of a switch being made between each pair of contexts. This matrix need not be symmetrical i.e. the weight influencing the switch from context A to context B is not necessarily the same as that influencing the switch from context B to context A. Thus, it is possible to increase the likelihood of switching to particular contexts if they are deemed to be more important than others e.g. you may want to more readily switch to a work related context than a home related one.

The operation of the present invention, as set out above with reference to Figures 2 to 6, will now be described by way of an example. The example relates to an individual who uses ICT in both his work and personal lives and uses a system and applications which can monitor the use of ICT and can set the context of the ICT appropriately and as a result adjust the way in which data is delivered to the user.

Adam is a sales account manager and has a number of clients that he deals with on a day to day basis. He also provides input to a number of projects which include campaigns to drive sales, and the development of new products. Outside of work he has a number of interests including sport and photography: he maintains a website for a football supporters' club and is a member of a camera club. He regularly communicates with friends, and deals with club related matters, using e-mail.

If Adam is working on a sales proposal for one of his most important accounts, Paradise Travel, and is in the process of reviewing the proposal that will go to the customer. The context monitor on his PC is aware that he has the proposal open and can infer that the proposal in relevant to Paradise Travel. Adam has previously created a topic for Paradise Travel, which is assigned to the 'Clients' context and has identified a number of documents as belonging to that topic (for example by tagging them). The current document is one of these tagged documents and as a result the context monitor records the fact that Adam is reading a document related to the Paradise Travel topic and sets his current context accordingly to 'Clients'. It may also record the time at which the inference was made, the relevant topic and degree of confidence associated with it. Table 1 below shows an example of the sort of record that may be created by the context monitor. Since the document has been manually assigned to the 'Paradise Travel' topic, the confidence score is high.

Table 1: Example of context monitor record

| Time | 2010-03-2614:30 |
|------------|-------------------|
| Topic | 'Paradise Travel' |
| Confidence | 1 |

Whilst reviewing the document, Adam receives e-mails from colleagues working on a sales campaign he is involved with and from a friend regarding the need to add a match report to the supporters' club website. The context monitor can infer that these e-mails are not in Adam's current context, either because Adam has tagged the senders as belonging to other contexts or by analysing the content of the e-mails and determining the context based on this. Since they are outside of the current context Adam is not alerted about the arrival of these e-mails and thus is not interrupted from his current task. He would of course still be able to access the e-mails through his e-mail client should he choose to do so.

As he reviews the proposal, Adam checks some facts about Paradise Travel by accessing a historical document relating to the account. This document has not been tagged with the current context but the context monitor is able to infer based upon its content that it is relevant to Paradise Travel and records that Adam is still working on the same topic. The context monitor may thus create a new record, which is shown in Table 2 below:

Table 2: Second example of context monitor record

| Time | 2010-03-26 14:45 |
|------------|-------------------|
| Topic | 'Paradise Travel' |
| Confidence | 0.7 |

In this case the confidence is lower since the inference was made automatically and it reflects the degree of match determined between the document contents and the topic (for example, based on the overlap of keywords deemed relevant to both). The context monitor now has two pieces of evidence and determines the current context based on a combination of these.

As Adam continues to review the document he realise that some of the items discussed therein are subject to a discount based upon a recent sales campaign and thus he accesses some material about the campaign. The context monitor identifies the new material as being relevant to the topic 'Campaign Genesis', which has been assigned to the 'Projects' context. The context monitor creates a further record

Table 3: Third example of context monitor record

| Time | 2010-03-26 14:50 |
|------|------------------|
| Topic | 'Campaign Genesis' |
| Confidence | 0.8 |

At this point, the context monitor detects Adam's interest in two different topics and must infer the relevant context based upon some combination of the data. As described above, an aging function may be implemented to reduce the confidence associated with each entry over time. This may be of the form:

$$Confidence = \mathrm{Re}\,cordedConfidence \times \frac{100}{100 + CurrentTime - \mathrm{Re}\,cordedTime} \qquad [1]$$

These adjusted confidence measures can be compared with a threshold value, for example 0.5, and if they are above the threshold they are considered in the determination of context. In our example we assume that the measures for the two topics are above the threshold value and thus the 'Clients' and 'Projects' contexts are both relevant. Since these two contexts have a common ancestor in the hierarchy of contexts, that is 'Work', this context can then selected as being the current context. Thus, the context can be said to have evolved since the previous context is still deemed to be relevant. Now that the context has changed, the context monitor can inform the software on Adam's PC of the change. His e-mail application alerts Adam about the new e-mails that were deemed relevant to the 'Projects' context, as this is now part of the current context 'Work'.

If Adam then checks a sports news site to see if there is any team news regarding tonight's football match then the context monitor will record that he is looking at a topic which is relevant to the 'Sport' context. As there's a large distance between the current 'Work' context and the 'Sport' context then this means there is not likely to be any relationship between them and in these circumstances it may not be appropriate to try to evolve the context and that thus a complete switch may be preferable. As discussed above, a context switch should not be initiated by spurious results from a classifier or when the user has only momentarily addressed information relating to a topic outside of the current context.

The latter is true in the present case since Adam is just quickly checking a website during a break from his main task. The context monitor will generate a further record, shown below in Figure 4:

Table 4: Fourth example of context monitor record

| Time | 2010-03-26 15:00 |
|------|------------------|
| Topic | 'Football' |
| Confidence | 0.85 |

When considering a potential context switch, the confidence level associated with the new topic needs to be much higher than that which was associated with the previous topics. In this case, we assume that they are not since the confidence rating for the 'Work' reflected evidence has not degraded significantly and there is only one piece of evidence associated with the 'Sport' context. As such the context monitor does not enforce the switch. Additionally, Adam might have influenced this knowing that he often briefly checks such sites. He could influence the context monitor resulting in it requiring significant evidence to switch to the 'Sport' context when currently in the 'Work' context.

Adam returns to his work and completes the proposal which he sends to his manager. As he has finished his work for the day he again returns to the sports news site and checks for any more news about the team for tonight's match. He then accesses the portal from where he can update the supporters' club site. The context monitor has now received more evidence related to the 'Sport' context and in this case it exceeds the required levels to make a switch. The context is switched to 'Sport'. Adam is then alerted about the email from his friend about the match report. He adds this to the supporters' club website along with the team news.

Meanwhile, Adam's manager has noticed that the sales proposal has arrived in his e-mail inbox. He quickly reads it and as he likes what he sees he sends a positive e-mail to Adam. Adam is reading some forum posts from his fellow supporters about tonight's match so is still in the 'Sport' context. However, he is still alerted to the arrival of the email as the context monitor is instructed to always alert him when his boss e-mails him, regardless of his context. Adam reads the e-mail and then heads off to the match.

Figure 7 shows a schematic depiction of a system 200 which can be used to implement a method according to the present invention. The content 200 that is held on a user's computer is read by a content monitoring subsystem 220 and the content that is of interest is then analysed by content classifier subsystem 230. The content 200 may be the emails received and sent by a user, documents stored on a computer hard drive, a cache of browsed and/or downloaded material from the internet, for example web pages, blogs, forum postings, social network content and interactions, etc. As it is increasing common for users to have more than one device or terminal that can receive data, for example laptop computers, desktop computers, netbooks, smartphones, tablet computers, network connected media players, etc, then the content that a user has over a number of different devices may be combined and regarding as forming a single content repository for the purpose of the present invention.

The content classifier subsystem 230 produces a classification for each piece of content resulting in one or more topics being deemed to be relevant and this classification data is forwarded to the context manager 240. The context map 100 outputs the current topical context of the user to the context manager. The context manager can combine these inputs, along with other contextual information such as the type of device(s) being used, device location, etc to determine the behaviour of one or more context aware application programs 250, such as an email client, document management application, etc. As the context determined by the context map evolves (or switches), the context manager will cause the context aware application programs on a device to display different content, suppress content that was previously displayed, or to modify the priority with which some data items are displayed.

A person skilled in the art would recognise that the present invention comprises a number of different processes which can be implemented in software, which can be executed on a general purpose computing apparatus, such as a personal computer, netbook, smartphone, tablet computer, network connected media player or a server computer which can be accessed by a client device or terminal. Figure 8 shows a schematic depiction of such an apparatus 800, which comprises one or more central processing units 810, volatile data storage means 820 and non volatile data storage means 830, which are interconnected by data bus 840. The apparatus further comprises display means 850, user input means 860 and network interface 870.

The apparatus may comprise integrated display means and user input means, for example a touch screen, or they may be separate, for example a conventional display screen and a keyboard and/or mouse. The non volatile data storage means may comprise one or more hard disc drives; in addition there may be provided removable non volatile data storage means, such as removable hard disc drives or optical media (for example re-writable or recordable DVDs). The network interface may be a local area network adaptor, with the LAN being connected to other LANs and wide area networks (WANs) to enable the apparatus to communicate with and exchange data with other computers. Alternatively, the network interface may be a DSL modem, or similar, that provides a connection to a WAN, such as the internet or an intranet, which enables communications with further networks.

The non volatile data storage means 830 comprises an operating system 832 and one or more application programs 834. The application programs 834 preferably comprise the one or more context aware application programs 250 discussed above with reference to Figure 7. The operating system comprises the software that the computing apparatus requires to operate, communicate with other computers, receive input from users, display outputs and results to users, etc. Application programs 834 can be executed by the apparatus in order to provide additional functionality. Non volatile data storage means 830 further comprises computer code 836 which can be executed in order to perform a method according to the present invention, for example such as the one described above. It will be understood that the computer code 836 may comprise a single integrated application, or a number of different modules that are accessed separately to execute a method according to the present invention. Each module may perform the functionality of one or more of the processes which comprise the present invention.

It will be understood that the exact structure of the general purpose computing apparatus is not important as long as it is capable of executing the computer code which performs a method according to the present invention. Such computer code may be deployed to such a general purpose computing apparatus via download, for example via the internet, or on some physical media, for example, DVD, CD-ROM, USB memory stick, etc.

## Claims

1.   A method of selecting data to be displayed by a terminal, the method comprising the steps of:

  a) analysing content being accessed by a terminal from a content repository;
  b) classifying the content being accessed by the terminal;
  c) determining the context of the terminal;
  d) selecting data to be displayed on a terminal in accordance with the content classification performed in step b) and the terminal context determined in step c),

wherein in step c) the context of the terminal is determined in accordance with data extracted from a context map, the context map comprising a plurality of contexts, the plurality of contexts being arranged in a first hierarchical network, and a plurality of topics, the plurality of topics being arranged in a second hierarchical network such that the each of the contexts in the lowest hierarchical level of the first hierarchical network are associated with one or more topics from the highest hierarchical level of the second hierarchical network.

2. A method according to Claim 1, wherein the data extracted from the context map is derived from analysing content being accessed by the terminal and associating that content with one or more of the plurality of topics comprised within the context map.

3. A method according to Claim 2, wherein the context of the terminal is determined in accordance with one or more of the plurality of contexts comprised within the context map, the or each of the plurality of contexts being connected to the one or more topics associated with the content being accessed by the terminal.

4. A method according to Claim 3, wherein the context of the terminal is determined in accordance with one of the plurality of contexts comprised within the context map, contexts being located within the first hierarchical network such that it is at the highest hierarchical level within the first hierarchical network such that it can be connected to the one or more topics associated with the content being accessed by the terminal.

5. A method according to any preceding claim, wherein the terminal context is further determined in accordance with one or more of the location of the terminal, the characteristics of the terminal or the time of day.

6. A method according to any preceding claim, wherein in step d), in accordance with the content classification performed in step b) and the terminal context determined in step c), selected data items are not displayed to a user.

7. A method according to any of claims 1 to 6, wherein in step d), in accordance with the content classification performed in step b) and the terminal context determined in step c), a first group of data items are displayed to a user with greater priority than a second group of data items.

8. A data carrier device comprising computer executable code for performing a method according to any of Claims 1 to 7.

9. An apparatus comprising a central processing unit, volatile data storage means and non volatile data storage means, the apparatus being configured to perform a method according to any of Claims 1-7.

Figure 1

Figure 2

Figure 3

EP 2 372 577 A1

Figure 4

Figure 5

Figure 6

Figure 7

Figure 8

Europäisches
Patentamt

European
Patent Office

Office européen
des brevets

## EUROPEAN SEARCH REPORT

Application Number

EP 10 25 0692

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KAMMANAHALLI H ET AL: "Context aware retrieval in web-based collaborations" PERVASIVE COMPUTING AND COMMUNICATIONS WORKSHOPS, 2004. PROCEEDINGS OF THE SECOND IEEE ANNUAL CONFERENCE ON, PISCATAWAY, NJ, USA,IEEE, 14 March 2004 (2004-03-14), pages 8-12, XP010689720 ISBN: 978-0-7695-2106-0 * the whole document * | 1-9 | INV. G06F17/30 |
|  | ----- |  |  |

**TECHNICAL FIELDS SEARCHED (IPC)**

G06F

The present search report has been drawn up for all claims

| Place of search | Date of completion of the search | Examiner |
|---|---|---|
| Munich | 15 September 2010 | König, Wolfgang |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J DAVIES et al.** Knowledge Sharing Agents over the World Wide Web. *BT Technology Journal,* July 1998, 104-109
- **J DAVIES et al.** Ontoshare: A Knowledge Management Environment for Virtual Communities of Practice. *Proc. 2nd Int. Conf. On Knowledge Capture,* 2003, 20-27

- **B FORTUNA.** Semi-automatic Construction of Topic Ontology. *Semantics, Web and Mining,* 2005
- Bridging the gap between knowledge management and e-learning with context aware corporate learning solutions. **A SCHMIDT.** Post Conf. Proc. 3rd Conf. Professional Knowledge Management - Experiences and Visions (WM05. Springer, 2005, 203-213